(19) Europäisches Patentamt

European Patent Office

Office européen des brevets

(11) Veröffentlichungsnummer: **0 269 908**

**A2**

(12) # EUROPÄISCHE PATENTANMELDUNG

(21) Anmeldenummer: 87116394.5

(22) Anmeldetag: 06.11.87

(51) Int. Cl.4: **H02P 8/00**

(30) Priorität: 04.12.86 DE 3641448

(43) Veröffentlichungstag der Anmeldung:
08.06.88 Patentblatt 88/23

(84) Benannte Vertragsstaaten:
AT BE CH DE ES FR GB GR IT LI LU NL SE

(71) Anmelder: **Gerhard Berger GmbH & Co. KG**
**Fabrik elektrischer Geräte**
**Breslauer Strasse 7**
**D-7630 Lahr(DE)**

(72) Erfinder: **Schnebel, Gerhard**
**Herrstrasse 38**
**D-7601 Neuried 1(DE)**
Erfinder: **Kleis, Hansjörg**
**Im Weilersfeld 1**
**D-7630 Lahr 19(DE)**
Erfinder: **Gfrörer, Ralf, Dr.**
**Im Egert 1**
**D-7630 Lahr 17(DE)**

(74) Vertreter: **Patentanwälte Dipl.-Ing. Hans**
**Schmitt Dipl.-Ing. Wolfgang Maucher**
**Dreikönigstrasse 13**
**D-7800 Freiburg i.Br.(DE)**

(54) **Ansteuerschaltung für 5-Phasen-Schrittmotor sowie Verfahren zum Ansteuern.**

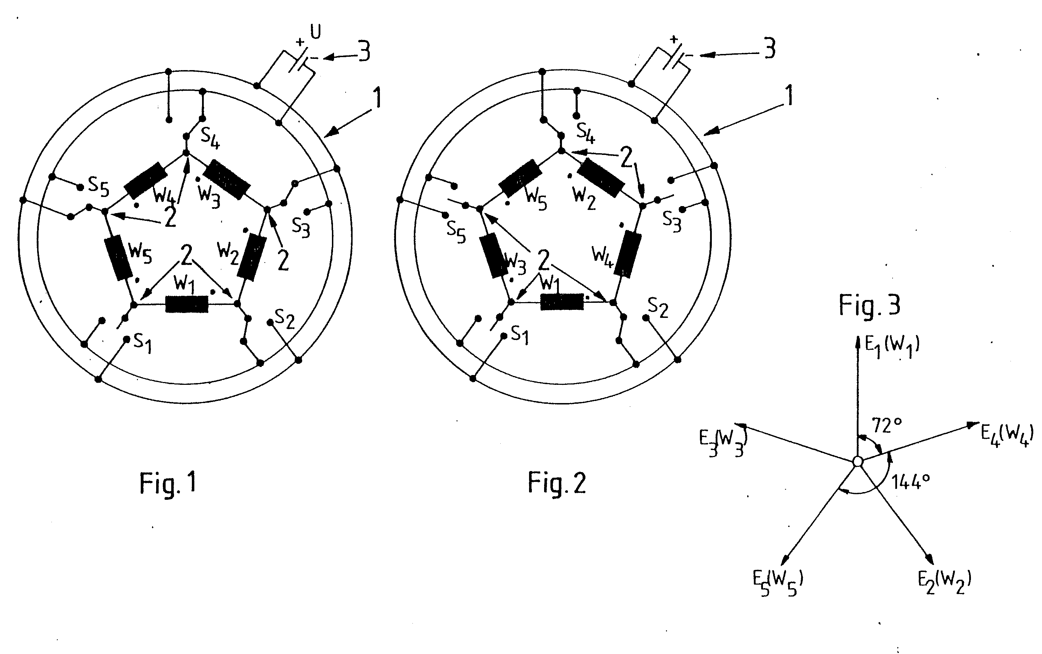

(57) Die Erfindung betrifft eine Ansteuerschaltung für permanenterregte 5-Phasen-Schrittmotoren mit einer 5-Eckschaltung (Fig. 1) in Reihe verbundene Statorwicklungen (W 1 bis W 5). An die zwischen den einzelnen Statorwicklungen befindlichen Knotenpunkte (2) sind elektronische Schalter zum Anlegen der Versorgungsspannung mit unterschiedlicher Polarität angeschlossen. Mit Hilfe dieser Schalter (S 1 bis S 5) kann zusätzlich zu den beiden aktiven Schaltpositionen zum wechselweisen Anlegen der Versorgungsspannung mit unterschiedlicher Polarität, eine dritte Schaltposition zum Freischalten des jeweiligen Knotenpunktes (2) vorgenommen werden. Dadurch sind nun Ansteuerkonfigurationen möglich, die auch Halbschrittpositionen ergeben. Dies läßt sich erreichen, wenn nach einer Vollschritt-Ansteuerkonfiguration, wo vier Statorwicklungen bestromt und eine kurzgeschlossen ist, anschließend zwei Wicklungen durch Freischalten des dazwischen befindlichen Knotenpunktes in Reihe geschaltet und alle Wicklungen bestromt werden. Es ergibt sich dann der Halbschritt. Weiterhin besteht die Möglichkeit, durch Freischalten jeweils von mindestens zwei Knoten (2) den gleichen Motor auch an doppelter Betriebsspannung gleichwertig zu betreiben.

Fig. 1

## Ansteuerschaltung für 5-Phasen-Schrittmotor sowie Verfahren zum Ansteuern

Die Erfindung betrifft eine Ansteuerschaltung, für permaneterregte 5-Phasen-Schrittmotoren mit zu einer 5-Eckschaltung in Reihe verbundenen Statorwicklungen, wobei an die zwischen den einzelnen Statorwicklungen gebildeten Knotenpunkte elektronische Schalter zum Anlegen der Versorgungsspannung mit unterschiedlicher Polarität angeschlossen sind.

Bei Schrittmotoren mit zu einer 5-Eckschaltung in Reihe verbundenen Statorwicklungen ist in vorteilhafter Weise eine Steuerschaltung mit z.B. gegenüber einer sogenannten H-Brückenschaltung geringerem Bauteileaufwand möglich. Auch kann die 5-Eckschaltung über fünf Anschlußlitzen angeschlossen werden, so daß auch der Verdrahtungsaufwand reduziert - gegenüber der H-Brückenschaltung praktisch halbiert ist. Nachteilig ist jedoch, daß mit der 5-Eckschaltung der eingangs erwähnten Art, im Gegensatz zu der aufwendigeren H-Brückenschaltung, kein Halbschrittbetrieb möglich ist.

Aufgabe der vorliegenden Erfindung ist est, eine einfache Ansteuerschaltung der eingangs erwähnten Art zu schaffen, welche die Vorteile der H-Brückenschaltung mit denen der 5-Eckschaltung vereint. Insbesondere soll bei geringem Bauteile- und Verdrahtungsaufwand auch ein Halbschrittbetreib möglich sein.

Zur Lösung dieser Aufgabe wird erfindungsgemäß insbesondere vorgeschlagen, daß die Schalter jeweils zusätzlich zu ihren beiden aktiven Schaltpositionen zum wechselweisen Anlegen der Versorgungsspannung mit unterschiedlicher Polarität, eine dritte Schaltposition zum Freischalten des jeweiligen Knotenpunktes und damit zum Hintereinanderschalten der beidseits des Knotens befindlichen Wicklungen aufweisen. Dadurch können zwei oder auch mehr Wicklungen in Reihe geschaltet werden, wodurch unter anderem auch für einen Halbschrittbetrieb erforderliche Wicklungsschaltungen möglich sind. Weiterhin kann bedarfsweise bei gleicher Spulenauslegung ein Betrieb des Motors an doppelter Versorgungsspannung erfolgen.

Die Erfindung betrifft auch ein Verfahren zum Ansteuern eines 5-Phasen-Schrittmotors mit zu einer 5-Eckschaltung in Reihe verbundenen Statorwicklungen, die mittels elektronischer Schalter wahlweise bestrombar sind, wobei je ein Schalter an einen zwischen den Statorwicklungen befindlichen Knotenpunkt angeschlossen ist, die im Verlauf eines Schrittfolgezyklus mit einem der Versorgungsspannungspole geschaltet werden und wobei für eine Vollschrittbetrieb eines 5-Phasen-Motors jeweils vier Statorwicklungen für jeden Schritt bestromt werden. Erfindungsgemäß ist nun vorgesehen, daß zwischen zwei aufeinanderfolgenden Vollschritt-Ansteuerkonfigurationen für einen Halbschritt wenigstens zwei Wicklungen durch Freischalten des dazwischen befindlichen Knotenpunktes in Reihe geschaltet und alle Wicklungen bestromt werden. Eine Möglichkeit besteht dabei darin, daß die Wicklungen so miteinander verbunden werden, daß die Drehung des Rotors Spannungen induziert werden, die bei zwei jeweils benachbarten Wicklungen um theoretisch 144° phasenverschoben sind und daß für eine Halbschrittposition zwischen zwei Vollschrittpositionen mit vier bestromten und einer kurzgeschlossenen Wicklung jeweils zwei Wicklungen in Reihe geschaltet und alle Wicklungen bestromt werden. Für einen kontinuierlichen Halbschrittbetrieb wechselt somit eine Bestromungskonfiguration einerseits mit vier bestromten und einer kurzgeschlossenen Wicklung jeweils mit einer Bestromungskonfiguration, wo alle Wicklungen bestromt und dabei zwei von den fünf Wicklungen in Reihe geschaltet sind, ab. Andererseits besteht aber auch die Möglichkeit, die eine oder die andere Bestromungskonfiguration ausschließlich zu - schalten und somit zwei Möglichkeiten für einen Vollschrittbetrieb zur Verfügung zu haben.

Nach einem weiteren Vorschlag der Erfindung können die Wicklungen so miteinander verbunden werden, daß bei Drehung des Rotors Spannungen induziert werden, die bei zwei jeweils benachbarten Wicklungen theoretisch 72° zueinander phasenverschoben sind, wobei für eine Vollschrittbetrieb von den vier bestromten Statorspulen jeweils zwei für jeden Schritt durch Freischalten des dazwischen befindlichen Knotenpunktes in Reihe geschaltet werden und die fünfte Spule kurzgeschlossen wird. Da hierbei jeweils zwei Wicklungen in Reihe geschaltet sind, kann der Motor mit doppelter Versorgungsspannung betrieben werden.

Nach einer Weiterbildung besteht die Möglichkeit, daß die Wicklungen so miteinander verbunden werden, daß bei Drehung des Rotors Spannungen induziert werden, die bei zwei jejeweils benachbarten Wicklungen um theoretisch 72° zuein ander phasenverschoben sind, wobei für eine Halbschrittposition zwischen zwei Vollschrittpositionen mit vier bestromten und jeweils zwei in Reihe geschalteten sowie einer kurzgeschlossenen Wicklung, jeweils eine Gruppe von drei Wicklungen und eine Gruppe von zwei Wicklungen in Reihe geschaltet und bestromt werden. Dadurch ist bei doppelter Betriebsspannung auch ein Halbschrittbetrieb bzw. ein Vollschrittbetrieb in anderer Schaltungskonfiguration möglich.

Nachstehend ist die Erfindung mit ihren wesentlichen Einzelheiten anhand der Zeichnungen in Ausführungsbeispielen näher erläutert.

Es zeigt etwas schematisiert:

Fig. 1 eine Wicklungsanordnung, bei der die induzierten Spannungen benachbarter Wicklungen um jeweils 144° zueinander phasenverschoben sind,

Fig. 2 eine Wicklungsanordnung, bei der die induzierten Spannungen benachbarter Wicklungen um jeweils 72° zueinander verrschoben sind,

Fig. 3 eine Darstellung der fünf induzierten Spannungen der Wicklungen als Zeiger,

Fig. 4 eine schematische Darstellung für Ansteuerkonfigurationen für eine Halbschrittbetrieb,

Fig. 5 Ansteuerkonfigurationen für einen Vollschrittbetrieb,

Fig. 6 gegenüber Fig. 5 andere Ansteuerkonfigurationen für einen anderen Vollschrittbetrieb,

Fig. 7 bis Fig. 9 etwa Fig. 4 bis 6 vergleichbare Darstellungen mit Ansteuerkonfigurationen für doppelte Betreibsspannung bei Halbschrittbetrieb und zwei verschiedenen Vollschrittbetriebsweisen und

Fig. 10 und 11 jeweils die Schalterstellungen für einen Schrittfolgezyklus von 20 Halbschritten.

In den Figuren 1 und 2 sind 5-Eckschaltungen 1 gezeigt, bei denen die Wicklungen W 1 bis W 5 in Reihe verbunden sind. Durch Punkte sind jeweils die Wicklungsanfänge gekennzeichnet. Zwischen die einzelnen Statorwicklungen W 1 bis W 5 sind Knotenpunkte 2 gebildet, an die Schalter S 1 bis S 5 angeschlossen sind. Zur Verdeutlichung sind diese Schalter als mechanische Schalter dargestellt. In der praktischen Ausführung sind sie jedoch durch elektronische Halbleiterschalter realisiert. Durch die Schalter S 1 bis S 5 können die einzelnen, zwischen den Wicklungen W 1 bis W 5 befindlichen Knotenpunkte 2 wechselweise an die Pole der Versorgungsspannungs-Quelle 3 geschaltet werden. Erfindungsgemäß ist nun vorgesehen, daß die Schalter S 1 bis S 5 jeweils zusätzlich zu diesen beiden aktiven Schaltpositionen mit Verbindung entweder zu Pluspol oder zum Minuspol der Versorgungsspannung auch in eine Neutralstellung gebracht werden können, in der der entsprechende Knotenpunkt praktisch freigeschaltet ist. Die an den freigeschalteten Knotenpunkt angrenzenden Wicklungen sind somit wirksam in Reihe geschaltet. Figur 3 zeigt eine Darstellung der fünf induzierten Spannungen E 1 bis E 5 der Wicklungen W 1 bis W 5 als Zeiger. Die Spannungen haben einen näherungsweise sinusförmigen Zeitverlauf und entstehen bei kontinuierlicher Drehung des Rotors. Die Zeiger beschreiben insbesondere die unterschiedliche Phasenlage der Spannungen zueinander. Aus dieser Zeigerdarstellung ist auch entnehmbar, daß bei der 5-Eckschaltung der Wicklungen W 1 bis W 5 nach Figure 1 die induzierten Spannungen benachbarter Wicklungen um jeweils 144° zueinander phasenverschoben sind. Bei der 5-Eckschaltung der Wicklungen W 1 bis W 5 gemäß Figur 2 ergibt sich demnach eine Phasenverschiebung von 72° zwischen den induzierten Spannung benachbarter Wicklungen.

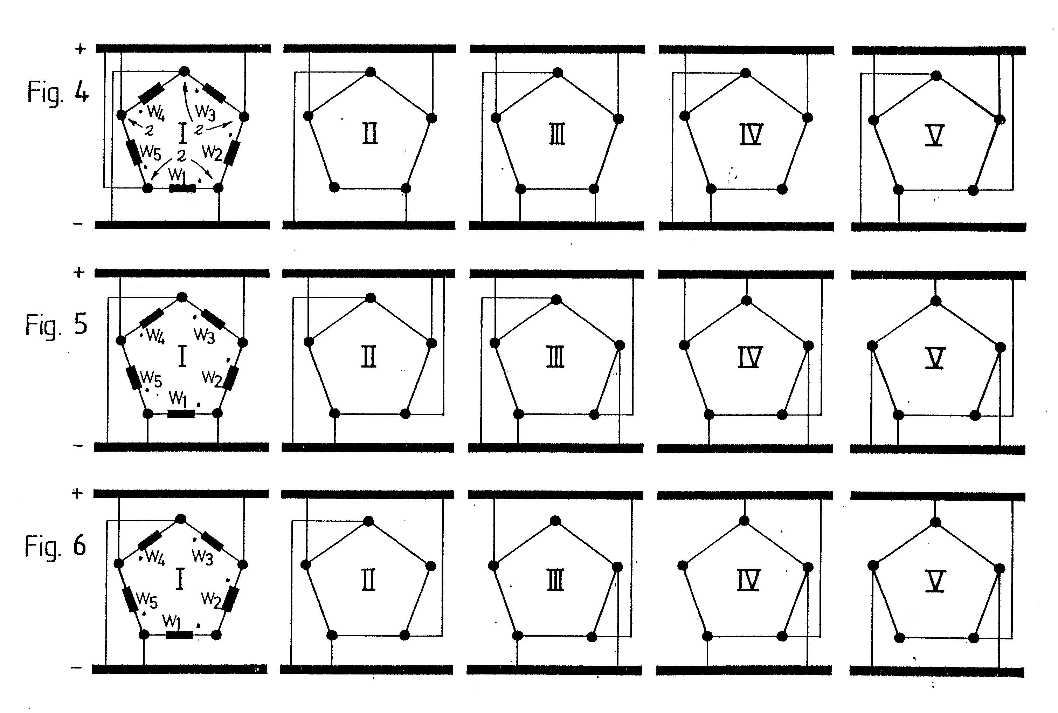

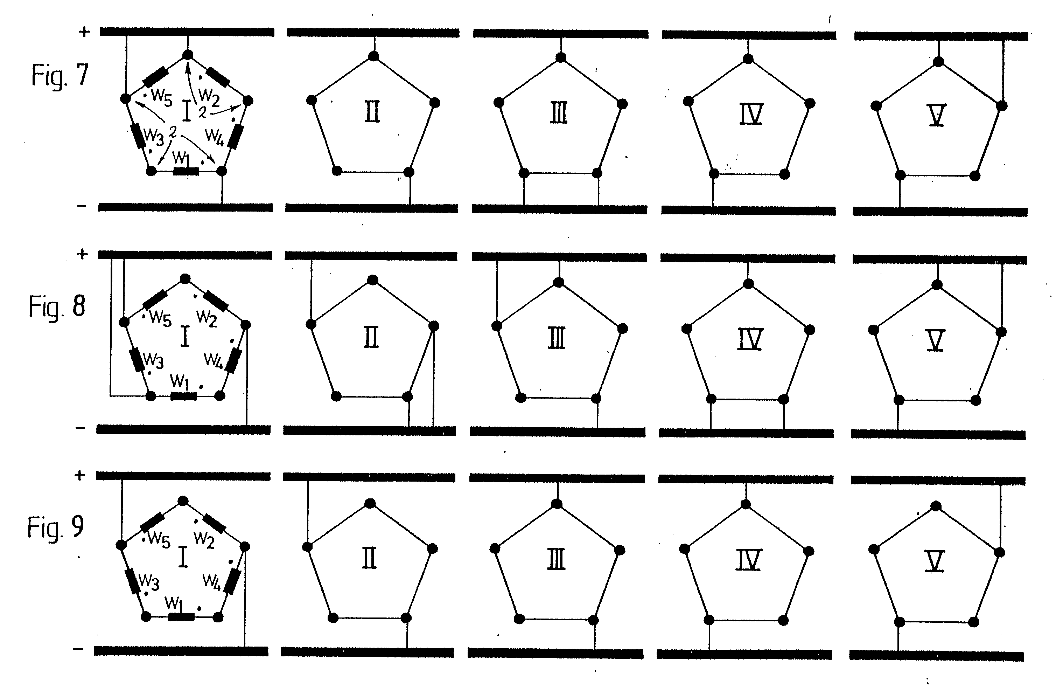

In den Fig. 4 bis 6 sind für fünf Schrittfolgen I bis V die jeweils unterschiedlichen Ansteuerkonfigurationen erkennbar. Der Einfachheit halber sind in diesen Figuren und auch in den Figuren 7 bis 9 die geschalteten Verbindungen zu den Versorgungsspannungspolen durchgehend ohne Schalter dargestellt. Die Wicklungsanordnung in 5-Eckschaltung in Fig. 4 bis 6 entspricht der in Fig. 1, während die Wicklungsanordnung gem. Fig. 7 bis 9 Fig. 2 entspricht.

Für einen Vollschrittbetrieb bei der 5-Eckschaltung gemäß Fig. 1 sind bei jedem Schritt vier Wicklungen bestromt und eine Wicklung kurzgeschlossen, wie diese bei den fünf Schrittfolgen I bis V gemäß Fig. 5 erkennbar ist. Bei der Schrittposition I ist beispielsweise die Wicklung W 1 mit beiden Polen an den Minuspol geschaltet und somit kurzgeschlossen, während die Wicklungen W 2 bis W 5 jeweils an die Betriebsspannung mit unterschiedlicher Polarität geschaltet sind. Zyklisch umlaufend erfolgt mit jedem Schritt eine Änderung der Ansteuerkonfiguration, wobei ausgehend von der Schrittposition I zunächst die Wicklung W 1, bei dem Schritt II die Wicklung W 2, bei dem Schritt III die Wicklung W 3 usw. kurzgeschlossen sind, während die anderen Wicklungen bestromt sind. Die Folge gem. Fig. 5 entspricht somit der bei 5-Eckschaltung üblichen Vollschritt-Betriebsweise. Durch die Möglichkeit, die Schalter S 1 bis S 5 auch in eine neutrale, "polfreie" Position zu bringen, besteht die Möglichkeit, zwischen den in Fig. 5 gezeigten Vollschrittpositionen Halbschrittpositionen anzufahren. Dazu werden zwischen zwei aufeinander folgenden Vollschritt-Ansteuerkonfigurationen zwei Wicklungen durch Freischalten des dazwischen befindlichen Knotenpunktes in Reihe geschaltet und alle Wicklungen werden bestromt. Diese Ansteuerkonfiguration ist in den Fig. 1 sowie Fig. 4 und Fig. 6 erkennbar. In Fig. 4 ist diese Ansteuerkonfiguration bei den Schritten II und IV vorhanden, während in Fig. 6 alle Schrittpositionen I bis V dieser Ansteuerkonfiguration entsprechen. Figur 1 entspricht dabei der Schrittstellung II in Fig. 4, wo der Knotenpunkt 2 zwischen den Wicklungen W 1 und W 5 freigeschaltet ist, während die anderen Wicklungen W 2 bis W 4 jeweils durch die Schalter S 2 bis S 5 an die Betriebsspannung angelegt sind. Werden nur die Halbschritt-Ansteuerkonfigurationen gemäß den Schrittpositionen II und IV in Fig. 4 direkt nacheinander geschaltet, so ergeben sich im weiteren Verlauf von Schrittposition zu Schrittposition Vollschritte. Diese ist in Fig. 6 gezeigt. Es besteht also die Möglichkeit, mit Hilfe von zwei verschiedenen Ansteuerkonfigurationen (Fig. 5 oder Fig. 6) Vollschrittbetrieb zu fahren oder aber man hat die Möglichkeit, durch abwechselnde Ansteuerkonfigurationen gemäß Fig. 5 und 6b einen Halbschrittbetrieb zu fahren, wie dies in Fig. 4 dargestellt ist.

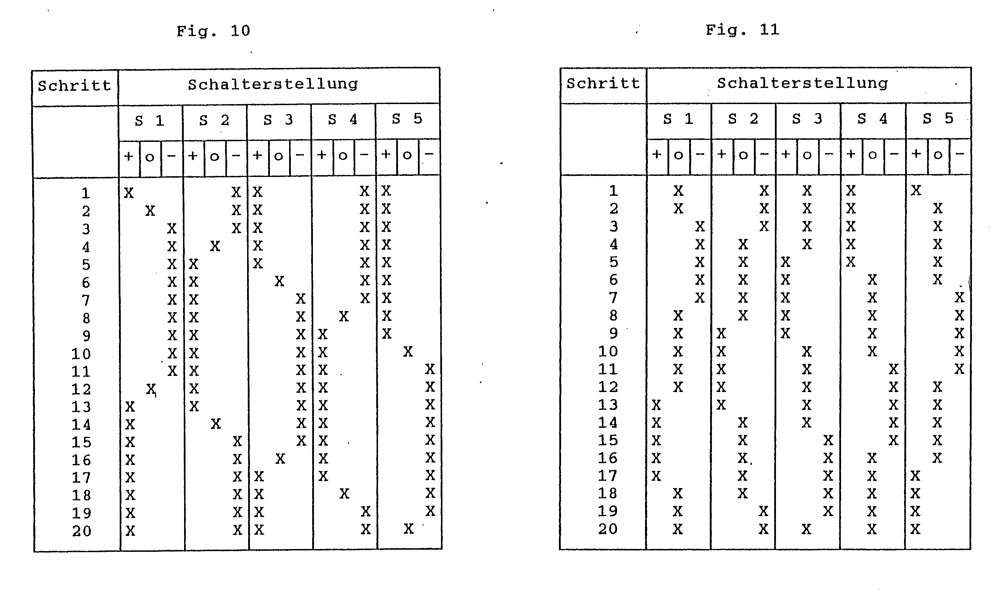

Figur 10 zeigt die erforderlichen Schalterstellungen für einen Schrittfolgezyklus von 20 Halbschritten. Diese Darstellung bezieht sich auf die 5-Eckschaltung gemäß Figur 1 und entspricht von den Schrittfolgen her Figur 4.

In Figur 2 sind die Wicklungen W 1 bis W 5 so miteinander verbunden, daß bei Drehung des Rotors Spannungen induziert werden, die bei jeweils benachbarten Wicklungen theoretisch 72° zueinander phasenverschoben sind. Dies ist auch unter Zuhilfenahme der Zeigerdarstellung gemäß Fig. 3 gut erkennbar. Durch die Möglichkeit des Freischaltens der einzelnen Knotenpunkte 2 können nun bei dieser Schaltung für einen Vollschrittbetrieb von vier bestromten Statorspulen jeweils zwei für jeden Schritt durch Freischalten des dazwischen befindlichen Knotenpunktes in Reihe geschaltet werden, während die fünfte Spule kurzgeschlossen wird. Daraus ist erkennbar, daß jeweils zwischen den beiden Polen der Stromversorgung zwei in Reihe geschaltete Wicklungen angeschlossen sind, so daß dementsprechend auch ein Betrieb des Motors mit doppelter Betriebsspannung gegenüber Figur 1 möglich ist. Figur 8 zeigt in fünf Schrittpositionen I bis V entsprechende Ansteuerkonfigurationen für einen Vollschrittbetrieb.

Auch bei der Schaltung gemäß Figur 2 ist ein Halbschrittbetrieb möglich, indem zwischen zwei Vollschrittpositionen gemäß Figur 8, wo jeweils vier bestromte und dabe jeweils zwei in Reihe geschaltete sowie eine kurzgeschlossene Wicklung vorhanden sind, jeweils eine Gruppe von drei Wicklungen und eine Gruppe von zwei Wicklungen in Reihe geschaltet und bestromt werden. Eine solche Ansteuerkonfiguration ist in fig. 2 dargestellt. Sie entpsricht der Schrittposition II in Fig. 7. Die Schrittpositionen I, III und V entsprechend Schalterstellungen aus der Folge gemäß Figur 8. Die jeweils dazwischen befindlichen Schrittpositionen II und IV bilden dann die Ansteuerkonfigurationen, bei denen jeweils eine Gruppe von drei Wicklungen, z.B. W 1, W 3 und W 5 und W 4 (vgl. Fig. 2) in Reihe geschaltet sind. Bei dieser Schalterstellung sind die Knotenpunkte 2 zwischen der Wicklung W 1 und W 4 und zwischen der Wicklung W 2 und W 5 an den Minuspol bzw. den Pluspol der Versorgungsspannung angeschlossen. Es ist somit ein Halbschrittbetrieb möglich. Dem Halbschrittbetrieb gemäß Figur 7 entsprechend sind in einem Schrittfolgezyklus von 20 Halbschritten die zugehörigen Schalterstellungen in Fig. 11 dargestellt.

Werden nur die Schrittpositionen I, III, V usw. aus Figur 7 geschaltet, erhält man einen Vollschrittbetrieb gemäß Figur 8. Werden dagegen aus Figur 7 die Schrittpositionen II, IV usw. verwendet, so erhält man einen anderen Vollschrittbetrieb gemäß Figur 9.

Aus der vorliegenden Erfindung ergibt sich unter anderem der besondere Vorteil, daß nach der Herstellung des Stators, durch Anordnung der Wicklungen gemäß Figur 1 oder gemäß Figur 2 und durch die Ansteuerung der mit der Möglichkeit des Freischaltens der Knotenpunkte 2, der Motor gleichwertig an unterschiedlichen Spannungen wahlweise betrieben werden kann. Ein spezielles Anpassen des Stators bei seiner Herstellung für unterschiedliche Betriebsspannungen wie bisher, insbesondere durch geänderte Windungszahl und/oder Drahtstärke wird dadurch vermieden. Fertigungstechnisch und auch bezüglich der Lagerhaltung ergeben sich dadurch erhebliche Vorteile. Außerdem ist der Anwendungsspielraum auch durch die Möglichkeit des Halbschrittbetriebes wesentlich erweitert.

Alle in der Beschreibung, den Ansprüchen und den Zeichnungen dargestellten Merkmale können sowohl einzeln als auch in beliebiger Kombination miteinander erfindungswesentlich sein.

## Ansprüche

1. Ansteuerschaltung für permanentmagneterregte 5-Phasen-Schrittmotoren mit zu einer 5-Eckschaltung in Reihe verbundenen Statorwicklungen, wobei an die zwischen den einzelnen Statorwicklungen gebildeten Knotenpunkte elektronische Schalter zum Anlegen der Versorgungsspannung mit unterschiedlicher Polarität angeschlossen sind, **dadurch gekennzeichnet,** daß die Schalter (S 1 bis S 5) jeweils zusätzlich zu ihren beiden aktiven Scahltpositionen zum wechselweisen Anlegen der Versorgungsspannung mit unterschiedlicher Polarität, eine dritte Schaltposition zum Freischalten des jeweiligen Knotenpunktes (2) und damit zum Hintereinanderschalten der beidseits des Knotens befindlichen Wicklungen (W 1 bis W 5) aufweisen.

2. Verfahren zum Ansteuern eines 5-Phasen-Schrittmotors mit zu einer 5-Eckschaltung in Reihe verbundenen Statorwicklungen, die mittels elektronischer Schalter wahlweise bestrombar sind, wobei je ein Schalter an einen zwischen den Statorwicklungen befindlichen Knotenpunkt angeschlossen ist, die im Verlauf eines Schrittfolge zyklus an einen der Versorgungsspannungspole geschaltet werden und wobei für einen Vollschrittbetrieb eines 5-Phasen Motors jeweils vier Statorwicklungen für jeden Schritt bestromt werden, dadurch gekennzeichnet, daß zwischen zwei aufeinanderfolgenden Vollschritt-Ansteuerkonfigurationen, für einen Halbschritt wenigstens zwei Wicklungen (W) durch Freischalten dazwischen befindlichen Knotenpunktes (2) in Reihe geschaltet und alle Wicklungen (W 1 bis W 5) bestromt werden.

3. Verfahren nach Anspruch 2, dadurch gekennzeichnet, daß die Wicklungen so miteinander verbunden werden, daß bei Drehung des Rotors Spannungen induziert werden, die bei zwei jeweils benachbarten Wicklungen um theoretisch 144° phasenverschoben sind und daß für eine Halbschrittposition zwischen zwei Vollschrittpositionen mit vier bestromten und einer kurzgeschlossenen Wicklung jeweils zwei Wicklungen in Reihe und alle Wicklungen bestromt werden.

4. Verfahren nach Anspruch 2, dadurch gekennzeichnet, daß die Wicklungen so miteinander verbunden werden, daß be Drehung des Rotors Spannungen induziert werden, die bei zwei jeweils benachbarten Wicklungen theoretisch 72° zueinander phasenverschoben sind und daß für einen Vollschrittbetrieb von den vier bestromten Statorspulen jeweils zwei für jeden Schritt durch Freischalten des dazwischen befindlichen Knotenpunktes in Reihe geschaltet werden und die fünfte Spule kurzgeschlossen wird.

5. Verfahren nach Anspruch 2, dadurch gekennzeichnet, daß die Wicklungen so miteinander verbunden werden, daß bei Drehung des Rotors Spannungen induziert werden, die bei zwei jeweils benachbarten Wicklungen um theoretisch 72° zueinander phasenverschoben sind und daß für eine Halbschrittposition zwischen zwei Vollschrittpositionen mit vier bestromten und jeweils zwei in Reihe geschalteten sowie einer kurzgeschlossenen Wicklung, jeweils eine Gruppe von drei Wicklungen und eine Gruppe von zwei Wicklungen in Reihe geschaltet und bestromt werden.

Fig. 1

Fig. 2

Fig. 3

0 269 908

Fig. 4

Fig. 5

Fig. 6

0 269 908

Fig. 7

Fig. 8

Fig. 9

0 269 908

Fig. 10

| Schritt | Schalterstellung | | | | | | | | | | | | | | |
|---|---|---|---|---|---|---|---|---|---|---|---|---|---|---|---|
| | S 1 | | | S 2 | | | S 3 | | | S 4 | | | S 5 | | |
| | + | o | − | + | o | − | + | o | − | + | o | − | + | o | − |
| 1 | X | | | | | X | X | | | | | X | X | | |
| 2 | | X | | | | X | X | | | | | X | X | | |
| 3 | | | X | | | X | X | | | | | X | X | | |
| 4 | | | X | | X | | X | | | | | X | X | | |
| 5 | | | X | X | | | X | | | | | X | X | | |
| 6 | | | X | X | | | | X | | | | X | X | | |
| 7 | | | X | X | | | | | X | | | X | X | | |
| 8 | | | X | X | | | | | X | X | | | X | | |
| 9 | | | X | X | | | | | X | X | | | X | | |
| 10 | | | X | X | | | | | X | X | | | | X | |
| 11 | | | X | X | | | | | X | X | | | | | X |
| 12 | | X | | X | | | | | X | X | | | | | X |
| 13 | X | | | X | | | | | X | X | | | | | X |
| 14 | X | | | | X | | | | X | X | | | | | X |
| 15 | X | | | | | X | | | X | X | | | | | X |
| 16 | X | | | | | X | | X | | X | | | | | X |
| 17 | X | | | | | X | X | | | X | | | | | X |
| 18 | X | | | | | X | X | | | | X | | | | X |
| 19 | X | | | | | X | X | | | | | X | | | X |
| 20 | X | | | | | X | X | | | | | X | X | | |

Fig. 11

| Schritt | Schalterstellung | | | | | | | | | | | | | | |
|---|---|---|---|---|---|---|---|---|---|---|---|---|---|---|---|
| | S 1 | | | S 2 | | | S 3 | | | S 4 | | | S 5 | | |
| | + | o | − | + | o | − | + | o | − | + | o | − | + | o | − |
| 1 | | X | | | | X | | X | | | X | | | X | |
| 2 | | X | | | | X | | X | | | X | | | | X |
| 3 | | | X | | | X | | X | | | X | | | | X |
| 4 | | | X | | X | | | X | | | X | | | | X |
| 5 | | | X | | X | | X | | | | X | | | | X |
| 6 | | | X | | X | | X | | | | | X | | | X |
| 7 | | | X | | X | | X | | | | | X | | | X |
| 8 | | X | | | X | | X | | | | | X | | | X |
| 9 | | X | | X | | | X | | | | | X | | | X |
| 10 | | X | | X | | | | X | | | | X | | | X |
| 11 | | X | | X | | | | X | | | | X | | | X |
| 12 | | X | | X | | | | X | | | | X | | X | |
| 13 | X | | | X | | | | X | | | | X | | X | |
| 14 | X | | | | X | | | X | | | | X | | X | |
| 15 | X | | | | X | | | | X | | | X | | X | |
| 16 | X | | | | X | | | | X | | X | | | X | |
| 17 | X | | | | X | | | | X | | X | | X | | |
| 18 | | X | | | X | | | | X | | X | | X | | |
| 19 | | X | | | | X | | X | | | X | | X | | |
| 20 | | X | | | | X | | X | | | X | | X | | |

0 269 908